Europäisches Patentamt

European Patent Office

Office européen des brevets

(11) Publication number: **0 482 698 A2**

# EUROPEAN PATENT APPLICATION

(21) Application number: **91202669.7**

(22) Date of filing: **15.10.91**

(51) Int. Cl.⁵: **G05B 19/04**

(30) Priority: **23.10.90 IT 2182390**

(43) Date of publication of application:
**29.04.92 Bulletin 92/18**

(84) Designated Contracting States:
**AT BE CH DE DK ES FR GB GR IT LI LU NL SE**

(71) Applicant: **CLABER S.P.A.**
**Via Pontebbana, 22**
**I-33080 Fiume Veneto Pordenone(IT)**

(72) Inventor: **Roman, Gianfranco**
**Via Coletti, 24**
**I-33087 Pasiano (Pordenone)(IT)**
Inventor: **Marcolin, Carlo**
**Via Grigoletti, 5/A**
**I-33080 San Martino Di Campagna (PN)(IT)**

(74) Representative: **Mittler, Enrico et al**
**c/o Marchi & Mittler s.r.l. Viale Lombardia, 20**
**I-20131 Milano(IT)**

(54) **Electronic device for programming and operating a control unit for water distribution systems.**

(57) The device comprises a control unit (101) which contains a register of state (106) suitable for evolving through a succession of states (200-208) until it reaches a respective final state (209) corresponding to a programme inclusive of start-up instant, duration and frequency of activation of each system. The programmes introduced are stored in respective programme memories (108, 109). The device also comprises an internal clock (107) that can be compared with the content of said memories (108, 109) for determining the instant of start-up of a selected system and a counter (113) that stops the operation of said system at the end of the stored duration.

Fig.1

The present invention relates to an electronic device for programming and operating a control unit for water distribution systems.

The habit is known of programming the time of delivery of water for irrigating green areas, so as also to exploit the hours of absence of the owner and the hours of the night.

The manufacturers of gardening articles have therefore dedicated themselves to designing and manufacturing programmable control units to allow the user to programme one or more interventions of the irrigation system during the course of a day with the possible repetition over several days of the week.

The use is also known, with reference to the Italian patent application No. 21180 A/90 dated 2 August 1990 filed in the name of the same applicant, of a control unit capable of operating several ittigation systems independently.

The latter includes valve means controlled by an electric motor, suitable for arranging themselves alternatively in one or another of several positions defined by respective limit switches to open or close the communication between a single incoming water conduit and one or another of several outgoing water conduits connected to respective irrigation systems.

The object of the present invention is that of manufacturing an electronic device suitable for controlling in a manner programmable over time the operation of a control unit of the abovementioned type for the alternate operation of at least two water distribution systems.

According to the invention such object is attained through an electronic device for programming and operating a control unit for water distribution systems, comprising a control unit and at least one data input unit, characterized in that said control unit comprises a register of state which with each programming operation is suitable for evolving through a succession of states corresponding to the progressive storage of a succession of data introduced through said input unit until it reaches a respective final state corresponding to a complete programme inclusive of start-up instant, duration and frequency of activation of a respective system, at least one memory for storing the programmes introduced, a clock, a counter and a control logic suitable for checking the coincidence between the start-up instant of a given programme stored in said memory and the present time indicated by said clock and in the affirmative case to start the counting of said counter for a time corresponding to the duration stored for said programme and to command the operation of valve means for controlling the control unit for the corresponding activation of a water distribution system up to the end of counting by said counter.

In such a way it is possible to have available a programmable control unit so as to automatically control the independent activation of several systems in relation to the data previously introduced and stored in the control unit.

There is also preferably a display unit connected to the control unit and suitable to allow a check to be made at any time on the content of the memory.

If it is required to programme the control unit remotely there is also the possibility of inserting into the control unit a receiver and a decoder of the input data sent remotely by a transmitter.

The features of the present invention shall be made more evident by an embodiment illustrated as a non-limiting example in the enclosed drawings, wherein:

Fig. 1 illustrates a block diagramme of the device;

Fig. 2 shows a top plan view of the front part, provided with an input data device and a display unit, of a programmable control unit for water distribution systems that includes the abovementioned device;

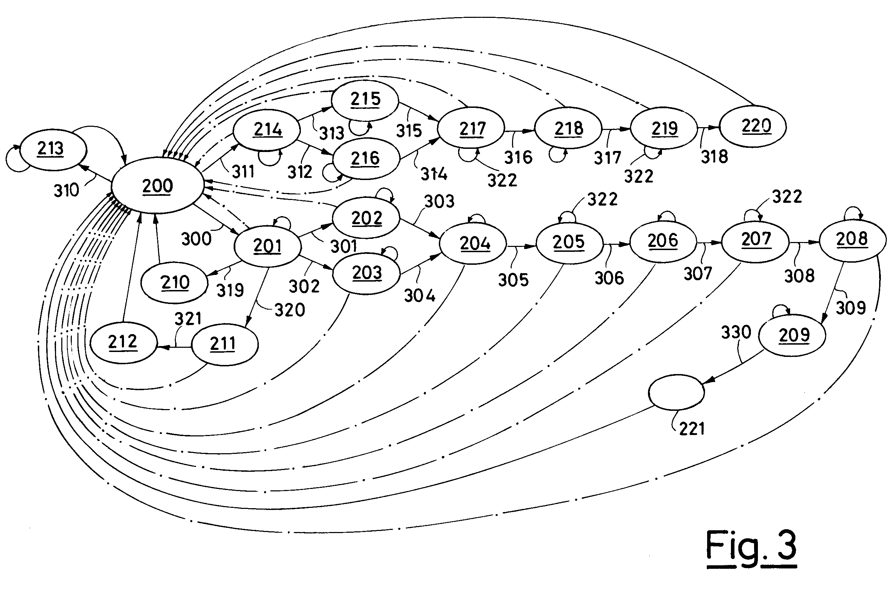

Fig. 3 indicates the succession of states among which the register of state of the abovementioned device evolves.

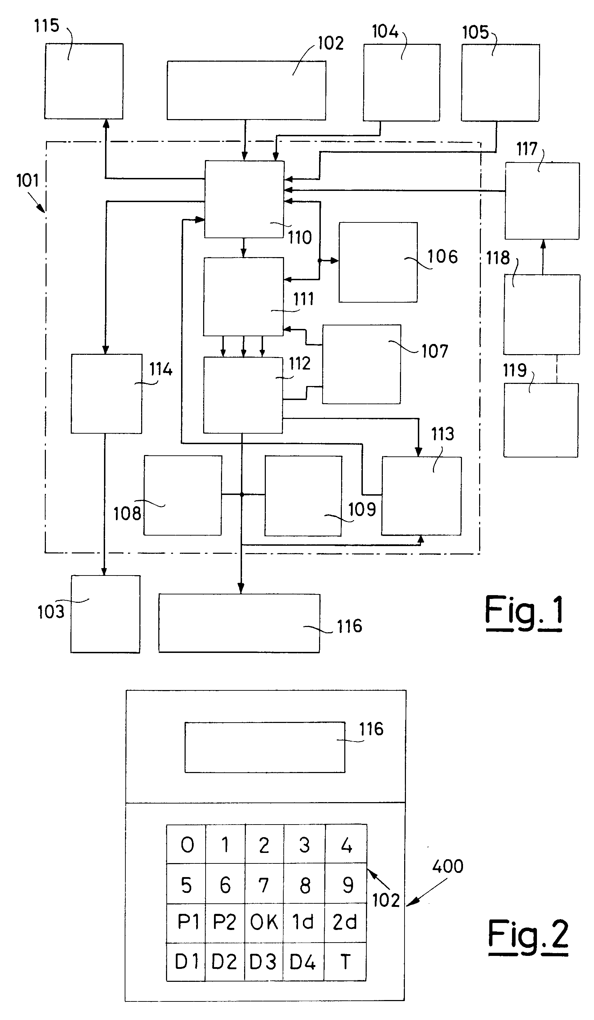

With reference to Fig. 1 the device comprises a control unit 101 containing inside it a control logic 110 suitable for receiving at input programming data from an input data unit constituted by a keyboard 102 and to control at output, through a driving circuit 114 and with the assistance of limit swicthes 104, 105, the operation and the stoppage of a motor 103 which in a control unit not shown drives the valve control means which perform the programmed activation of respective water distribution systems.

The control logic 110 also comprises a register of state 106 suitable for evolving through a succession of states for the temporary storage of the data introduced by the keyboard 102, a multiplexer 111, an input buffer 112 and memories 108, 109, for storing temporal programming data related to the operation of the control unit. There is also an internal clock 107, wherein the exact time is set through data introduced from the keyboard 102, and a counter 103 which when it reaches the moment at which the motor 103 for opening the valve control means for activating a particular system should start-up, by comparison between the time stored in the memories 108, 109 and that indicated by the clock 107, starts counting backwards until it reaches zero, at which point the control logic 110 through the driving circuit 114 commands the operation of the motor 103 for once again closing the previously opened valve control means and the consequent disactivation of the corresponding system.

There are also a display unit 116 and a buzzer 115 used for purposes which shall be better explained ater.

One version of the device with remote programming and control calls for the presence of a receiver 118 with a decoder 117, arranged inside the control unit and connected as a data input unit to the control logic 110, that is suitable for receiving data from a remote transmitter 119.

There is shown in Fig. 2 the front part of a control unit 400 where the keyboard 102 and the display unit 116 can be seen. The keyboard 102 has a set of twenty keys that can be pressed for operating the control logic, both during the programming step and during the possible step that directly commands the activation of the systems under control.

As illustrated in Fig. 2, there is a set of numerical keys from 0 to 9 for setting the internal clock 107 and for programming the instant (hours and minutes) at which the systems are to be operated, a key P1 and a key P2 for selecting the memory for the introduction of data, a key OK for confirming the correct sequence of the introduction of data, keys 1d, 2d for programming the frequency of operation of the systems, keys D1, D2, D3 and D4 for programming the duration of the operation of the systems, a key T for the initial control of the setting operation of the internal clock 107.

The operation of the device according to the invention is as follows.

Initially, the register of state 106 is in an at rest position 200.

Let us suppose that we wish to set the time on the internal clock 107.

For this purpose, by pressing the key T it is possible to impart a command 311 for the activation of the setting of the internal clock 107, which causes the register 106 to pass to a state 214. Then, by pressing one of the keys 0, 1 or the key 2, commands 312, 313 are imparted respectively for programming the tens of hours, which cause the register 106 to pass to respective states 216, 215. At this point, by pressing one of the keys from 0 to 9 or one of the keys from 0 to 3, respectively, according as to whether the commands 312 or 313 had been imparted previously, commands 314, 315 are imparted for programming the units of hours, which cause the register 106 to pass to a state 217.

At this point, by pressing in succession one of the keys from 0 to 5, one of the keys from 0 to 9 and the key OK, a succession of commands 316, 317, 318 is imparted for programming the tens of minutes, for programming the units of minutes and for confirming the programming of the clock 107, and the register of state 106 is thus made to evolve through corresponding states 218, 219, 220. From the state 220 that confirms the setting of the clock 107, the register of state 106 returns to the at rest state 200.

At this point it is possible to proceed to programming the operation of each system. This shall be programmed by pressing one or the other of the keys P1 or P2, according as to whether it is desired to programme the activation of one or another of the systems under control. In one or the other case there is generated a command 300 for selecting the system, which causes the register of state 106 to pass to a corresponding state 201. There are then pressed alternately one of the keys 0, 1 or the key 2, so as to generate commands 301, 302, respectively, that are imparted for programming the tens of hours of start-off of the selected system, so that the register 106 passes to a state 202, or to a state 203, respectively. At this point, by pressing alternatively one of the keys from 0 to 9 or one of the keys from 0 to 3, according as to whether the command 301 or the command 302 had been imparted previously, respective commands 303, 304 are imparted for programming the units of the hour at which the selected system is to start, which cause the register 106 to pass to a corresponding state 204. At this point, by pressing in succession one of the keys from 0 to 5, one of the keys from 0 to 9 and the key OK, it is possible to impart in succession commands 305, 306, 307 for programming the tens and the units of minutes at which the system is to start and for confirming that the selected system has been programmed, correspondingly causing the register of state 106 to pass to corresponding states 205, 206, 207.

One of the keys D1, D2, D3, D4 is now pressed, imparting a programming command 308 related to the duration of the operation of the selected system, causing the register of state 106 to pass to a corresponding state 208, and one of the keys 1d, 2d, is now pressed, imparting a corresponding command 309 related to the frequency of operation of the selected system, causing the register of state 106 to pass to a corresponding state 209. Lastly the key OK is pressed, imparting a corresponding command 330 to confirm the programming of the operation of the selected system, by means of which the register of state 106 evolves spontaneously in the initial state 200 after passing through an intermediate step 221 of storage in or the other of the memories 108, 109, of the operating programme of the selected system.

Once the setting of the internal clock 107 has been carried out as well as the programming of the operation of the systems with memorization of the respective operating programmes in the memories 108, 109, the control logic 110 reads instant by instant the content of the memories 108, 109, related to the instant of start-up of each system and, should this coincide with the hour shown by the internal clock 107, it commands, through the driving circuit 114, the operation of the motor 103 for opening the valve corresponding to the system to be activated and up to the intervention of the respective limit switch 104, 105, which, through the control logic 110, controls the stoppage of the motor 103. At the same time the control logic 110 initializes a backward count by the counter 113 to start from a number corresponding to the duration of the operation of the system, as per programme. When the counter 113 gets to zero the control logic 110 commands the closing of the valve, again under the action of the limit switches 104, 105, so as to stop the system currently in operation.

In addition to the programmed operation of the distribution systems, the device according to the invention also allows a system to be turned on or off instantaneously at any time.

Let us initially suppose that a system is to be turned on manually and instantaneously.

With the register of state 106 in the initial state 200 one of the keys P1 or P2 is pressed imparting a command 300 for selecting a system and causing the register of state 106 to pass to a corresponding state 201. One of the keys D1, D2, D3, D4 is now pressed, imparting a programming command 320 related to the duration of the operation of the selected system, causing the register of state 106 to pass to a corresponding state 211. The key OK is then pressed, imparting a command 321 to confirm the instantaneous turning on, which causes the register of state 106 to pass to a corresponding state 212 from which it shall evolve spontaneously to return in the initial state 200. The object of the confirmation command 321 is to command through the control logic 110 the operation of the driving circuit 114 and through the latter the operation of the motor 103 for the instantaneous opening of the valve corresponding to the system to be activated up to the intervention of the respective limit switch 104, 105, which, through the control logic 110, commands the stoppage of the motor 103.

Let us now suppose that a system is to be turned off instantaneously, either after a programmed activation or after a manual activation of the same system.

With the register of state 106 in the initial state 200 one of the keys P1 or P2 is pressed imparting a command 300 for selecting a system and causing the register of state 106 to pass to a corresponding state 201. The key OK is now pressed, imparting a command 319 to confirm the instantaneous turning off of the system, which causes the register of state 106 to pass to a state 210, from which the register 106 shall evolve spontaneously to return in the initial state 200.

The object of the confirmation command 319 is to command through the control logic 110 the reset of the counter 113 for the operation of the driving circuit 114 and through the latter the operation of the motor 103 for closing the valve corresponding to the system to be turned off up to the intervention of the respective limit switch 104, 105, which, through the control logic 110, commands the stoppage of the motor 103.

At any time, pressing the keys P1, P2 in sequence with the register of state 106, it is possible to impart a display command 310 of the respective content of the memories 108, 109, causing the register of state 106 to pass to a corresponding state 213, from which the register of state 106 shall evolve spontaneously to return in the initial state 200.

It should be noted that it is possible at any time, by pressing the keys OK and 2d simultaneously, to force the register 106 to return from the states 201-208, 211 and 213-219 to the initial state 200, as illustrated by the dotted lines.

It should be noted that pressure on a key that is not included among those to be used for the corresponding command in the states 201-208, 211 and 213-219 causes the register to remain in the abovementioned states and the buzzer 15 emit a signal. This prerogative is indicated by the autorings 322 associated with the various states.

If the device is made to operate with remote programming and control the same commands imparted by pressing the keys of the input unit 102 shall be transmitted by the remote transmitter 119 to the receiver 118 and through the decoder 117 shall cause the same transitions of state of the register 106 and shall thus command the same operation of the device.

## Claims

1. Electronic device for programming and operating a control unit for water distribution systems, comprising a control unit (101) and at least one data input unit (102), characterized in that said control unit (101) comprises a register of state (106) which with each programming operation is suitable for evolving through a succession of states (200-208) corresponding to the progressive storage of a succession of data introduced through said input unit (102) until it reaches a respective final state (209) corresponding to a complete programme inclusive of start-up instant, duration and frequency of activation of a respective system, at least one memory (108, 109) for storing the programmes introduced, a clock (107), a counter (113) and a control logic (110) suitable for checking the coincidence between the start-up instant of a given programme stored in said memory (108, 109) and the present time indicated by said clock (107) and in the affirmative case to start the counting of said counter (113) for a time corresponding to the duration stored for said programme and to command the operation of valve means for controlling the control unit (400) for the corresponding activation of an irrigation system up to the end of counting by said counter (113).

2. Device according to claim 1, characterised in that said input unit (102) comprises means (P1, P2) suitable for allowing the programming of the activation of each system through an evolution of the register of state (106) in a succession of states (200-209).

3. Device according to claim 2, characterised in that said means (P1, P2) can be activated in succession to allow the display of the content of said memories (108, 109) on a display unit (116) connected to the control unit (101).

4. Device according to claim 2, characterised in that said means (P1, P2), followed by the activation of duration means (D1, D2, D3, D4) and of a confirmation means (OK), command the evolution of the register of state (106) in a succession of states to directly cause the operation of said valve means for the activation of a corresponding system.

5. Device according to claim 2, characterised in that said means (P1, P2), followed by the activation of a confirmation means (OK) also present in the input unit (102) command an evolution of the register of state (106) in a succession of states (201, 210) to cause the operation of said valve means for the disactivation of a corresponding system.

6. Device according to claim 1, characterised in that said input unit (102) comprises means (T) suitable for setting the time on said clock (107) through the evolution of the register of state (106) in a succession of states (200, 214-220).

7. Device according to claim 1, characterised in that it comprises a decoder (117) connected to said control logic (110) to which there is in turn connected a receiver (118) for receiving programming and operating commands transmitted by a remote transmitter (119).

Fig.1

Fig.2

Fig. 3

EP 0 482 698 A2